# EUROPÄISCHE PATENTANMELDUNG

(11) **EP 3 444 878 A1**
(43) Veröffentlichungstag der Anmeldung: **20.02.2019**
(21) Anmeldenummer: 18185738.4
(22) Anmeldetag: 26.07.2018
(51) Int. Cl.: H01M 4/505, H01M 10/0525, H01M 4/50, H01M 6/08, H01M 2/02, H01M 6/16, H01M 4/75

(54) **MINIATURBATTERIE MIT KONSTANTEM ELEKTRODENDRUCK UND ELEKTROLYTRESERVOIR**

(30) Priorität: 17.08.2017 DE 102017118797; 20.10.2017 DE 102017124511
(71) Anmelder: LITRONIK Batterietechnologie GmbH, 01796 Pirna (DE)
(72) Erfinder: Freyer, Nico, 01454 Radeberg (DE); Roch, Michael, 01796 Pirna (DE); Staub, Roland, 01816 Bad Gottleuba-Berggießhübel (DE); Traulsen, Timm, 01796 Pirna (DE); Fehrmann, Gerd, 01796 Pirna (DE)
(74) Vertreter: Keck, Hans-Georg

(57) **Zusammenfassung**

Die Erfindung betrifft eine elektrochemische Spannungsquelle (1), mit: einer Anode (2), die Lithium aufweist, einer Kathode (3), die ein Manganoxid aufweist, einem Gehäuse (4), wobei die Kathode (3) und die Anode (2) in einem vom Gehäuse (4) umschlossenen Innenraum des Gehäuses (4) angeordnet sind und einander gegenüberliegen, einem Elektrolytreservoir in Form eines kompressiblen Speicherkörpers (6), der dazu ausgebildet ist, einen Elektrolyt aufzunehmen, wobei der Speicherkörper (6) zwischen der Anode (2) und der Kathode (3) angeordnet ist und dabei mit einer ersten Seite (6a) an einer Stirnseite (3b) der Kathode anliegt sowie mit einer zweiten Seite (6b), die der ersten Seite (6a) abgewandt ist, an einer Stirnseite (2a) der Anode (2) anliegt, wobei die Stirnseite (2a) der Anode (2) der besagten Stirnseite (3b) der Kathode (3) zugewandt ist, und einem Elektrolyt, der zumindest teilweise in dem Speicherkörper (6) aufgenommen ist. Erfindungsgemäß ist vorgesehen, dass der Speicherkörper (6) aus einem elektrisch isolierenden Material besteht, und dass die Kathode (3) dazu ausgebildet ist, bei einer Entladung der Spannungsquelle (1) eine Volumenzunahme zu erfahren, wobei die Anode (2) dazu ausgebildet ist, bei der Entladung eine Volumenabnahme zu erfahren, wobei zu jedem Zeitpunkt der Entladung der Absolutbetrag der bis dahin erfolgten Volumenzunahme der Kathode (3) zumindest so groß ist wie der Absolutbetrag der bis dahin erfolgten Volumenabnahme der Anode (2).

## Beschreibung

Die vorliegende Erfindung betrifft eine elektrochemische Spannungsquelle gemäß Anspruch 1.

Eine solche Spannungsquelle kann eine oder mehrere Lithiumanoden und eine oder mehrere Kathoden mit Braunstein als elektrochemisch aktive Komponente aufweisen.

Die US 7,771,873 B2 beschreibt eine Primärbatterie (beispielsweise für Digitalkameras), mit Zinkanode und wässrigem alkalischen Elektrolyt, bei der das Entladeverhalten durch eine Kathode verbessert werden soll, die aus einer bestimmten Zusammensetzung aus γ-Manganoxid und λ-Manganoxid besteht. Das Anschwellen der Kathode soll verhindert werden, indem das λ-Manganoxid mit einer geringeren Korngröße verwendet wird.

Im Abstr. 1409 des 215. ECS Meetings wird von Drews u. a. beschrieben, dass mit steigender Korngröße des Braunsteins die Dichte der Kathodenmasse in Batterien und damit auch Ihre Entladekapazität steigt. Gleichzeitig sinkt die Pulsbelastbarkeit.

Weiterhin offenbart die US 4,020,242 A eine Batterie, bei der ein frei beweglicher Elektrolyt im Volumen reduziert wird, wenn Druck durch Ausdehnung der Kathode oder der Anode ausgeübt wird. Weiterhin kann die Ausdehnung der Anode oder der Kathode durch eine Kontraktion eines elektrisch leitfähigen Spacers kompensiert werden.

Durch den Aufbau von Elektrodenpaketen in Stapelbauweise werden höhere Toleranzen benötigt, so dass in der Regel ein vollständiges Füllen des Gehäuses mit Elektrodenbauteilen nicht möglich ist.

Insbesondere können bei verhältnismäßig großen Elektrodendicken Stellen entstehen, die nicht durch einen Elektrolyt benetzt sind und entsprechend zu nicht bzw. schlechter entladbaren Zonen führen. Weiterhin kann am Entladeende der Batterie die maximale Pulsbelastbarkeit aufgrund der sich verringernden Lithiumanodenfläche sinken.

Hiervon ausgehend liegt der vorliegenden Erfindung daher die Aufgabe zugrunde, eine elektrochemische Spannungsquelle (Batterie) zu schaffen, die eine möglichst hohe Packungsdichte der Kathode für eine möglichst hohe Batteriekapazität sowie für eine möglichst gleichbleibende Pulsbelastbarkeit bis zum Entladeende aufweist.

Diese Aufgabe wird durch eine elektrochemische Spannungsquelle mit den Merkmalen des Anspruchs 1 gelöst. Vorteilhafte Ausgestaltungen der Erfindung sind in den Unteransprüchen angegeben und werden nachfolgend beschrieben.

Gemäß Anspruch 1 wird eine elektrochemische Spannungsquelle, insbesondere für ein implantierbares batteriebetriebenes Gerät, offenbart, mit:
- einer Anode, die Lithium aufweist,
- eine Kathode, die ein Manganoxid (insbesondere Braunstein) aufweist,
- einem Gehäuse, wobei die Kathode und die Anode in dem Gehäuse angeordnet sind und einander gegenüberliegen,
- einem Elektrolytreservoir in Form eines kompressiblen Speicherkörpers, der dazu ausgebildet ist, einen Elektrolyt aufzunehmen, und wobei der Speicherkörper zwischen der Anode und der Kathode angeordnet ist und dabei mit einer ersten Seite an einer Stirnseite der Kathode anliegt sowie mit einer zweiten Seite, die der ersten Seite abgewandt ist, an einer Stirnseite der Anode anliegt, wobei die Stirnseite der Anode der besagten Stirnseite der Kathode zugewandt ist,
   und
- einem Elektrolyt, der zumindest teilweise in dem Speicherkörper aufgenommen ist, wobei der Speicherkörper insbesondere Poren zur Aufnahme des Elektrolyts aufweist (der Speicherkörper kann z. B. nach Art eines Schwammes ausgebildet sein),

Erfindungsgemäß ist nun vorgesehen, dass der Speicherkörper aus einem elektrisch isolierenden Material besteht, und dass die Kathode dazu ausgebildet ist, bei einer Entladung der Spannungsquelle eine Volumenzunahme zu erfahren, wobei die Anode dazu ausgebildet ist, bei der Entladung eine Volumenabnahme zu erfahren, wobei zu jedem Zeitpunkt der Entladung der Absolutbetrag der bis dahin erfolgten Volumenzunahme der Kathode zumindest so groß ist, insbesondere genau so groß ist, wie der Absolutbetrag der bis dahin erfolgten Volumenabnahme der Anode.

Die Kathode ist mit anderen Worten insbesondere so gestaltet, dass während der Entladung ständig ein sicherer Kontakt zwischen der Kathode und der Stromableitung gewährleistet wird. Hierzu ist insbesondere vorgesehen, dass die Kathode mindestens so stark anschwillt, wie der Volumenverlust der Anode beträgt. Weiterhin wird insbesondere sichergestellt, dass die quellende Kathode stets ausreichend mit Elektrolyt versorgt wird.

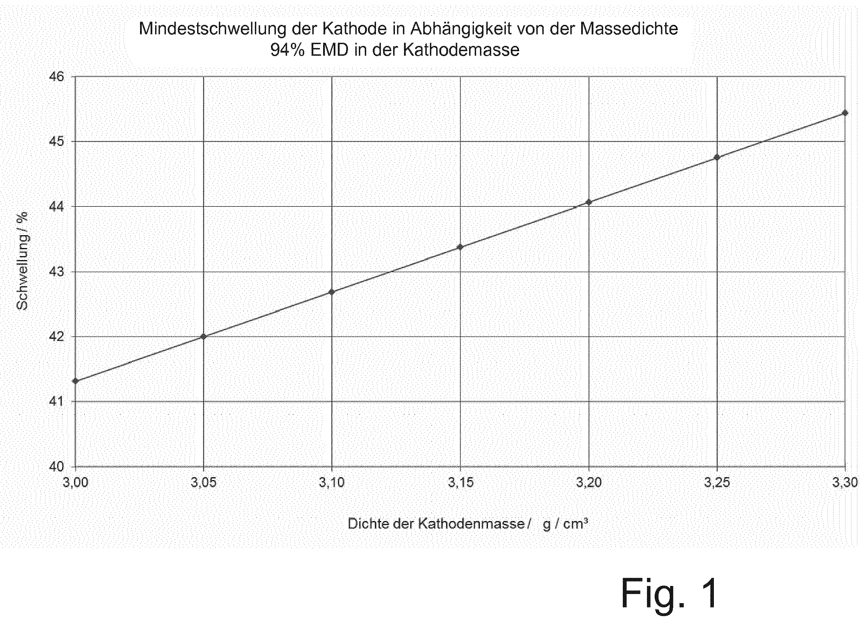

Durch die erfindungsgemäße Stapelbauweise bzw. -konfiguration der Kathode, Anode sowie des besagten Speicherkörpers und des Volumenzunahmeverhaltens der Kathode bzw. -abnahmeverhaltens der Anode kann das Innenvolumen des Gehäuses nahezu vollständig genutzt werden. Während der Entladung und somit Schwellung der Kathode, drückt diese insbesondere ständig über den Speicherkörper gegen die Anode. Somit bleiben der Abstand sowie der Elektrodendruck auf den Stromkollektor nahezu konstant, was zu gleichbleibenden Entladebedingungen führt. Dadurch kann die maximale elektrische Belastbarkeit bis zum Entladeende gehalten werden. Das notwendige Maß an Schwellung der Kathode hängt von der Dichte der Kathodenmasse ab (vgl. Fig. 1).

Gemäß einer Ausführungsform ist vorgesehen, dass der Speicherkörper elastisch kompressibel bzw. deformierbar ist.

Weiterhin ist gemäß einer Ausführungsform der Erfindung vorgesehen, dass Mangan in dem Manganoxid überwiegend, - insbesondere zumindest zu 90%, in der Oxidationsstufe +4 vorliegt, wobei das Manganoxid insbesondere elektrolytisch hergestelltes γ-MnO₂ ist, das vor der Verwendung insbesondere thermisch behandelt wurde, d.h., über einen vordefinierten Zeitraum auf einer vordefinierten Mindesttemperatur gehalten wird, wobei der Zeitraum z. B. im Bereich von 3 bis 6 Stunden liegen kann, und wobei z. B. die Temperatur im Bereich von 350°C bis 400°C liegen kann.

Weiterhin ist gemäß einer Ausführungsform der Erfindung vorgesehen, dass das Manganoxid eine BET-Oberfläche im Bereich von 15 m²/g bis 20m²/g aufweist. Die BET-Oberflächengröße wird mittels der bekannten BET-Messung nach DIN ISO 9277:2003-05 ermittelt.

Bevorzugt ist gemäß einer Ausführungsform vorgesehen, dass die Kathode aus dem Manganoxid gepresst ist, wobei das Manganoxid ein Gemisch aus zumindest einer ersten und einer zweiten pulverförmigen Fraktion ist, wobei die erste Fraktion feinkörniger ist als die zweite Fraktion.

Insbesondere ist das Gemisch Bestandteil einer Kathodenmasse, die auf einen Träger der Kathode, der einen Kollektor bildet, gepresst wird, wobei die Kathodenmasse, abgesehen von dem Gemisch, weitere Zusätze enthalten kann, wobei es sich bei den Zusätzen insbesondere um Bindemittel oder Leitzusätze handeln kann. Als Bindemittel kann z. B. einer der folgenden oder mehrere der folgenden Stoffe verwendet werden: PTFE, PVDF oder PE. Als Leitzusätze kann z. B. einer der folgenden oder mehrere der folgenden Stoffe verwendet werden: Ruß, Graphit, expandierter Graphit, Kohlenstofffasern oder Metallpulver.

Gemäß einer Ausführungsform der Erfindung ist weiterhin vorgesehen, dass die Kathodenmasse bzw. das Gemisch zwei verschiedene Korngrößenfraktionen von Braunstein enthält, wobei die erste Fraktion eine mittlere Korngröße von 30 µm bis 40 µm, insbesondere 35 µm aufweist und die zweite Fraktion eine mittlere Korngröße von 65 µm bis 75 µm, insbesondere 70 µm aufweist. Die erste Fraktion ist gemäß einer Ausführungsform der Erfindung in dem Gemisch in einem Mengenanteil von 15% bis 50%, insbesondere von 25%, enthalten. Weiterhin ist die zweite Fraktion gemäß einer Ausführungsform der Erfindung in einem Mengenanteil von 50% bis 85%, insbesondere 75%, in dem Gemisch enthalten. Die Auftrennung des Braunsteinpulvers in verschiedene Fraktionen kann durch Sieben, Sichten oder andere bekannte Verfahren erfolgen. Die Massenanteile der ersten und zweiten Fraktion des Gemisches addieren sich insbesondere jeweils zu 100%.

Weiterhin ist gemäß einer Ausführungsform der vorliegenden Erfindung vorgesehen, dass der Speicherkörper eines der folgenden Materialien aufweist oder aus einem der folgenden Materialien gebildet ist: ein nichtmetallisches Material, ein Polymer, Polyamid, Polyethylen, Polypropylen.

Weiterhin ist gemäß einer Ausführungsform der Erfindung vorgesehen, dass das Gehäuse eine der Kathode zugewandte Innenseite aufweist, die eine elektrisch isolierende Oberflächenschicht aufweist, wobei insbesondere die Oberflächenschicht ein Parylen aufweist oder aus einem Parylen gebildet ist.

Bei dem Parylen handelt es sich um einen Stoff gemäß der nachfolgenden Strukturformel:

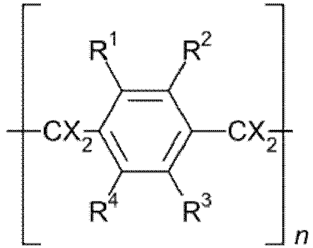

Hierbei kann X gleich Wasserstoff, und R¹ bis R⁴ gleich Wasserstoff sein (Parylene N).

Weiterhin kann X gleich Wasserstoff, R¹ gleich Chlor und R² bis R⁴ gleich Wasserstoff sein (Parylene C).

Weiterhin kann X gleich Wasserstoff, R¹ und R³ gleich Chlor, und R² und R⁴ gleich Wasserstoff sein (Parylene D).

Weiterhin kann X gleich Fluor und R¹ bis R⁴ gleich Wasserstoff sein (Parylene HT).

Weiterhin ist gemäß einer bevorzugten Ausführungsform der Erfindung vorgesehen, dass das Gehäuse hermetisch abgedichtet ist.

Weiterhin weist das Gehäuse gemäß einer Ausführungsform der Erfindung einen Deckel mit einer Durchgangsöffnung auf, durch die ein elektrisch leitfähiger Stift aus dem Gehäuse herausgeführt ist, wobei der Stift elektrisch leitend mit der Kathode verbunden ist. Der Stift kann z. B. Molybdän aufweisen oder aus Molybdän gebildet sein.

Zum Isolieren des Stiftes bezüglich des Deckels/Gehäuses ist gemäß einer Ausführungsform der Erfindung vorgesehen, dass ein in der Durchgangsöffnung angeordneter Abschnitt des Stiftes von einem Isolierkörper umgeben ist. Der besagte Isolierkörper kann z. B. aus einem Glas bestehen.

Weiterhin ist gemäß einer Ausführungsform der Erfindung vorgesehen, dass die elektrochemische Spannungsquelle ein weiteres Elektrolytreservoir aufweist, insbesondere in Form eines weiteren (insbesondere elastisch) kompressiblen Speicherkörpers, in dem zumindest ein Teil des Elektrolyts aufgenommen ist, und der insbesondere aus dem gleichen Material bestehen kann bzw. das gleiche Material aufweisen kann wie der eine Speicherkörper des mindestens einen Elektrolytreservoirs (siehe oben). Bevorzugt ist der weitere Speicherkörper zwischen dem Deckel und der Kathode angeordnet, wobei der weitere Speicherkörper sowohl an dem Deckel als auch an der Kathode anliegt. Der weitere Speicherkörper ist ebenfalls bevorzugt koaxial zur Kathode, zur Anode und zu dem anderen Speicherkörper angeordnet. Weiterhin ist der weitere Speicherkörper ebenfalls bevorzugt zylindrisch ausgebildet.

Gemäß einer weiteren Ausführungsform der Erfindung ist vorgesehen, dass die Anode elektrisch leitfähig mit einem Endabschnitt des Gehäuses verbunden ist, insbesondere über ein Ableitgitter.

Gemäß einer Ausführungsform der vorliegenden Erfindung ist vorgesehen, dass die Stirnseite (3b) der Kathode (3) einen Äquivalent-Durchmesser (D) aufweist, der kleiner ist als eine Länge der Kathode (3) entlang einer Längsachse (z) der Kathode (3). Der Äquivalent-Durchmesser der Stirnfläche berechnet sich dabei aus dem flächenäquivalenten Durchmesser eines Kreises, mit der gleichen Gesamtfläche wie die der Stirnfläche.

Insbesondere kann die Stirnseite der Kathode eine kreisrunde, ovale oder auch unregelmäßig geformte Grundfläche aufweisen. Auch vieleckige Grundflächen sind möglich, insbesondere rechteckige Grundflächen oder auch dreieckige Grundflächen bei prismatischen Kathoden beispielsweise.

Gemäß einer weiteren Ausführungsform der vorliegenden Erfindung ist vorgesehen, dass die Kathode und/oder die Anode jeweils zylindrisch ausgebildet sind, wobei bevorzugt die Kathode und die Anode koaxial zu einer Längsachse des Gehäuses angeordnet sind. Weiterhin ist bevorzugt der Speicherkörper koaxial zur Kathode sowie zur Anode angeordnet. Der Speicherkörper ist vorzugsweise auch zylindrisch ausgebildet. Vorteil dieser zylindrischen, koaxialen Bauweise ist die leichtere Herstellung durch die symmetrische Formgebung.

Weiterhin ist gemäß einer Ausführungsform der Erfindung vorgesehen, dass das Gehäuse in Richtung seiner Längsachse längserstreckt ausgebildet ist, wobei bevorzugt die Kathode koaxial zur Längsachse angeordnet ist und ebenfalls in Richtung der Längsachse längserstreckt ausgebildet ist. Längserstreckt bedeutet hierbei im Sinne der vorliegenden Erfindung, dass das Gehäuse bzw. die Kathode in Richtung der Längsachse eine größere Ausdehnung aufweist als in allen Richtungen senkrecht zur Längsachse.

Ein weiterer Aspekt der vorliegenden Erfindung betrifft ein batteriebetriebenes Gerät mit einer elektrisch betriebenen Funktionseinheit und einer erfindungsgemäßen elektrochemischen Spannungsquelle zum Betreiben der Funktionseinheit.

Bevorzugt ist dabei gemäß einer Ausführungsform vorgesehen, dass das batteriebetriebene Gerät in einen menschlichen oder tierischen Körper implantierbar ist, wobei insbesondere das batteriebetriebene Gerät eines der folgenden Geräte ist: ein Herzschrittmacher, ein Neurostimulator, eine Medikamentenpumpe oder ein Biomonitor.

Weitere Merkmale und Vorteile der vorliegenden Erfindung sollen bei der nachfolgenden Figurenbeschreibung eines Ausführungsbeispiels der Erfindung anhand der Figuren erläutert werden. Es zeigen:
- Fig. 1: eine graphische Darstellung der Schwellung der Kathode (%) über der Dichte der Kathodenmasse (g/cm³);
- Fig. 2: eine schematische Schnittdarstellung einer erfindungsgemäßen elektrochemischen Spannungsquelle zu Beginn (A) bzw. am Ende (B) einer Entladung der Spannungsquelle; und
- Fig. 3: die Spannung (V) über der Kapazität (mAh) bei der Konstantstromentladung von Batterien mit Kathoden gemäß Beispiel 1 und Beispiel 2, wobei Beispiel 2 einer erfindungsgemäßen Kathode entspricht.

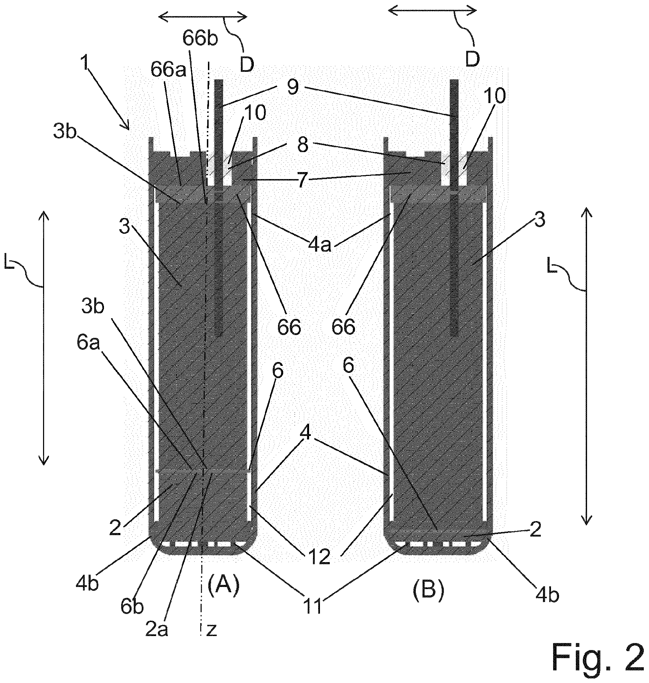

Die Erfindung betrifft eine elektrochemische Spannungsquelle (hierin auch als Batterie bezeichnet) 1. Eine Ausführungsform einer solchen Batterie ist in der Figur 2 dargestellt, und zwar zu Beginn einer Entladung der Batterie 1 (A) sowie am Ende der Entladung (B).

Die Spannungsquelle 1 weist eine Anode 2 auf, die Lithium aufweist, sowie eine Kathode 3, die ein Manganoxid aufweist. Die beiden Elektroden 2, 3 sind in einem Innenraum eines Gehäuse 4, angeordnet, wobei die Kathode 3 und die Anode 2 einander gegenüberliegen. Die Batterie 1 weist ferner ein Elektrolytreservoir in Form eines kompressiblen Speicherkörpers 6 auf, der einen Elektrolyt aufnimmt, wobei der Speicherkörper 6 zwischen der Anode 2 und der Kathode 3 angeordnet ist und dabei mit einer ersten Seite 6a an einer Stirnseite 3b der Kathode 3 anliegt sowie mit einer zweiten Seite 6b, die der ersten Seite 6a abgewandt ist, an einer Stirnseite 2a der Anode 2 anliegt, wobei diese Stirnseite 2a der Anode 2 der besagten Stirnseite 3b der Kathode 3 zugewandt ist.

Während der Entladung finden an den Elektroden 2, 3 der Batterie 1 folgende Prozesse statt. An der Lithium aufweisenden Anode 2 werden Lithium-Ionen und Elektronen erzeugt:

Li → Li⁺ + e⁻,

wobei die solchermaßen erzeugten Ladungsträger von der Kathode aufgenommen werden:

MnO₂ + Li⁺ + e⁻ → LiMnO₂.

Die Anode 2 wird also bei der Entladung aufgelöst, die Lithiumionen wandern durch den Elektrolyt zur Kathode 3 und werden in das Braunsteingitter eingelagert. Durch die Einlagerung der Lithiumionen wird das Braunsteingitter bzw. die Kathode 3 aufgeweitet.

Während der Entladung kommt es also zu einer durch das Material vorgegebenen Schwellung der Braunsteinkörner bzw. der Kathode 3, so dass diese eine Volumenzunahme erfährt. Die Anode 2 hingegen erfährt eine Volumenabnahme.

Erfindungsgemäß ist nun vorgesehen, dass der Speicherkörper 6 aus einem elektrisch isolierenden Material besteht, und dass weiterhin die Kathode 3 bzw. die Anode 2 so konfiguriert sind, dass zu jedem Zeitpunkt der Entladung der Absolutbetrag der bis dahin erfolgten Volumenzunahme der Kathode 3 zumindest so groß ist wie der Absolutbetrag der bis dahin erfolgten Volumenabnahme der Anode 2, wobei bevorzugt die Volumenzunahme der Volumenabnahme entspricht bzw. diese gerade kompensiert.

Mit anderen Worten ist also die Schwellung der Kathode mindestens so groß, wie der Volumenverlust der Anode. Der Anpressdruck der Anode 2 auf die Kathode 3 bleibt dadurch erhalten. Bis zum Entladeende wird eine gute Kontaktierung innerhalb der Kathodenmasse und zum Kollektor der Elektrode 3 gewährleistet.

Die Kathode 3 wird gemäß einer Ausführungsform durch Mischen und Pressen von Braunstein, vorzugsweise γ-MnO₂, insbesondere getempertes γ-MnO₂, sowie z. B. PTFE als Bindemittel und expandiertem Graphit als Leitzusatz auf einen Titan-Kollektor zur Stromableitung hergestellt.

Braunstein im Anlieferungszustand der Hersteller enthält in der Regel Partikel in einem sehr breiten Korngrößenspektrum. Bei einer mittleren Korngröße von 35 µm enthält das Material typischerweise mehr als 10% Partikel mit einer Korngröße, die unterhalb von 10 µm liegt und etwa 10% Partikel mit einer Korngröße, die oberhalb von 100 µm liegt. Presst man mit diesem Material Kathoden, dann wird die Struktur der Kathode durch die groben Partikel vorgegeben. Die kleinen Partikel befinden sich in den Zwischenräumen der großen Partikel. Bei der Entladung können dann kleine Partikel durch die Lithiumeinlagerung schwellen, ohne die Kathode merklich aufzuweiten. Die Gesamtschwellung der Kathode ist geringer, als bei der Verwendung von Material der erfindungsgemäßen Zusammensetzung

Bei einer ungünstigen Korngrößenverteilung kann des Weiteren die Schwellung der Kathode geringer sein, als der Volumenverlust der Anode. In der Batterie geht der Anpressdruck der Anode auf die Kathode verloren. Das kann zu Kontaktproblemen zwischen den weniger gut leitfähigen Braunsteinpartikeln und zum Kontaktverlust zum Kollektor führen. Die Folge wäre ein Anstieg des Innenwiderstands der Batterie und eine unvollständige Entladung.

Gemäß einer Ausführungsform der Erfindung werden daher zwei unterschiedliche Fraktionen des Braunsteins zur Kathodenherstellung gemischt, wobei die beiden Fraktionen eine unterschiedliche mittlere Korngröße aufweisen.

Um eine gute Packungsdichte der Kathode 3 zu erreichen, werden zwei Fraktionen mit typischen mittleren Korngrößen von 35 µm und 70 µm vermischt und insbesondere mit einem Leitzusatz und Bindemittel zu einer Elektrode 3 gepresst.

Der feinkörnige Anteil (erste Fraktion) mit einer mittleren Korngröße von z. B. 35 µm und z. B. 25% Masseanteil wird insbesondere in Menge und Korngröße so gewählt, dass das Material möglichst vollständig beim Pressen der Elektrode 3 in die Hohlräume des grobkörnigen Anteils (zweite Fraktion) eingelagert wird.

Auf diese Weise wird insbesondere erreicht, dass die Schwellung der Elektrode 3 während der Entladung nicht in die Poren der Elektrode 3 erfolgen kann.

Die übrigen Komponenten der Elektrode 3, wie z. B. Graphit als Leitzusatz und PTFE als Bindemittel sind ebenfalls in ihrer Korngröße so zu bemessen, dass sie die mittlere Korngröße der feinkörnigen Braunsteinfraktion nicht übertreffen und damit nicht in der Elektrode 3 porositätssteigernd wirken.

Als Braunstein wird gemäß einer Ausführungsform bevorzugt ein Material mit hoher Kristallinität und damit verbunden niedriger BET-Oberfläche von vorzugsweise 15 bis 20 m²/g verwendet, welches beim Entladen stärker quillt.

Während der Entladung (diesbezüglich zeigt Fig. 2(A) den Anfangszustand und Fig. 2(B) den Endzustand nach erfolgter Entladung) entstehen durch das Aufquellen der Braunsteinpartikel in der Kathode 3 insbesondere neue Poren im Material der Kathode 3. Diese müssen für eine vollständige Entladung mit Elektrolyt gefüllt werden. Von Vorteil ist also ein Überschuss an Elektrolyt am Beginn der Entladung, der von der Kathode 3 mit zunehmender Entladetiefe aufgesaugt wird.

Frei beweglicher überschüssiger Elektrolyt ist in Batterien in der Regel unerwünscht, weil dieses zu kritischen chemischen Nebenreaktionen führen kann. Daher wird der Überschuss an Elektrolyt durch den komprimierbaren Speicherkörper 6 sowie ggf. durch einen weiteren Speicherkörper 66 gespeichert. Dieses Material kann z. B. ein Schwamm oder Vlies aus Polyamid, Polyethylen oder Polypropylen sein (siehe auch oben).

Die Batterie 1 kann im Einzelnen gemäß Figur 2 wie folgt ausgebildet sein.

Das Gehäuse 4 der Batterie 1 ist vorzugsweise hermetisch abgeschlossen und ist in Richtung einer Längsachse z des Gehäuses 4 längserstreckt ausgebildet, die Kathode 3 sowie die Anode 2 sind jeweils koaxial zur Längsachse z angeordnet und liegen in Richtung der Längsachse einander gegenüber. Hierbei ist auch die Kathode 3 in Richtung der Längsachse z längserstreckt ausgebildet.

Die Kathode 3, die Anode 2 sowie der zwischen Anode 2 und Kathode 3 angeordnete und in Richtung der Längsachse z komprimierbare Speicherkörper 6 sind vorzugsweise zylindrisch ausgebildet. Zwischen einer Innenseite 4a des Gehäuse 4 und der Anode 2 bzw. zwischen jener Innenseite 4a und der Kathode 12 ist vorzugsweise ein umlaufender Spalt 12 vorhanden, der ein Wachstum der Kathode 3 nach unten hin zur Anode 2 begünstigt.

Die besagte Innenseite 4a des Gehäuses 2 weist bevorzugt eine elektrisch isolierende Oberflächenschicht auf, die z. B. ein Parylen aufweist oder aus einem Parylen gebildet ist.

Auf einer der Anode 2 abgewandten Seite der Kathode ist der weitere, in Richtung der Längsachse z kompressible Speicherkörper 66 vorgesehen. Der weitere Speicherkörper 66 liegt mit einer ersten Seite 66a an einem Deckel 7 des Gehäuses 4 an, der das Gehäuse 4 verschließt. Weiterhin liegt der weitere Speicherkörper mit einer zweiten Seite 66b an einer dem Speicherkörper 66 sowie dem Deckel 7 zugewandten Stirnseite 3b der Kathode 3 an. Der weitere Speicherkörper 66 kann ebenfalls durch ein Kathodenwachstum in axialer Richtung bzw. in Richtung der Längsachse z komprimiert werden, wobei entsprechend Elektrolyt aus dem weiteren Speicherkörper austritt und in Poren der Kathode 3 einsickern kann.

Zum Kontaktieren der Kathode 3 weist der Deckel 7 weiterhin eine Durchgangsöffnung 8 auf, durch die ein elektrisch leitfähiger Stift 9 aus dem Gehäuse 4 herausgeführt ist, wobei der Stift 9 elektrisch leitend mit der Kathode 3 verbunden ist und sich entlang der Längsachse z erstreckt. Der Stift 9 kann z. B. aus Molybdän gebildet sein. Insbesondere ist ein in der Durchgangsöffnung 8 angeordneter Abschnitt des Stiftes 9 von einem Isolierkörper 10 umgeben, so dass der Stift 9 gegenüber dem Deckel 7 bzw. dem Gehäuse 4 elektrisch isoliert ist. Der Isolierkörper kann z. B. aus einem Glas bestehen.

Die Anode 2 ist hingegen bevorzugt elektrisch leitfähig mit einem Endabschnitt 4b des Gehäuses 4 über ein Ableitgitter 11 verbunden, wobei jener Endabschnitt 4b an einem dem Deckel 7 gegenüberliegenden Ende des Gehäuses 2 vorgesehen ist.

Im Folgenden wird beispielhaft die Herstellung einer Kathode anhand zweier Beispiele erläutert (Beispiel 1 und Beispiel 2), wobei Beispiel 2 einer erfindungsgemäßen Kathode entspricht.

### Beispiel 1

Eine Kathodenmassemischung wird hergestellt durch Mischen von:
- 95% Braunstein (EMD GH-PT, Firma TOSOH), getempert bei 350°C mit einer mittleren Korngröße von 38 µm (10% < 2µm, 10% > 90µm) entsprechend dem Lieferzustand,
- 4% expandiertem Graphit (BNB 90, Firma TIMCAL) mit mittlerer Korngröße 35 µm, und
- 1% PTFE (TF 9207, Firma Dyneon).

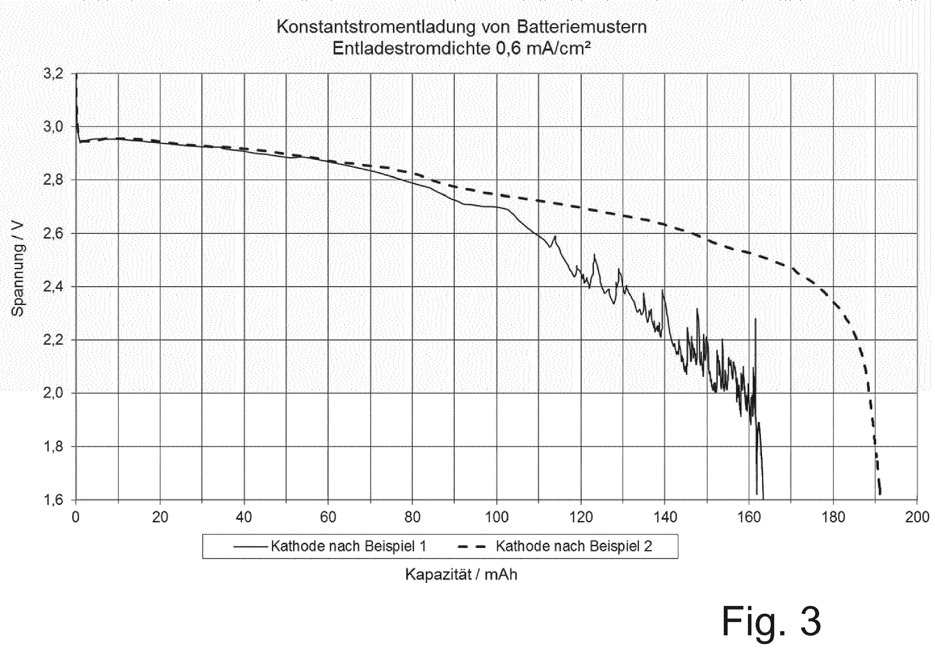

Die Pulvermischung wird auf einen Titankollektor zu einer Zylinderförmigen Kathode von 0,2 cm² Fläche und 15 mm Höhe (in Richtung der Längsachse z) verpresst. Die Dichte der Kathodenmasse beträgt 3,08 g/cm³. Die Kathode wird in einer Batterie, entsprechend Fig. 2 ohne Speicherkörper durch Entladung mit 0,2 mA/cm² geprüft. Die Ergebnisse werden in Fig.3 dargestellt.

Im ersten Teil der Entladung entsprechen die Werte den Erwartungen. Ab etwa 50% Entladetiefe werden die Spannungswerte instabil. Die Ausdehnung der Kathode während der Entladung ist zu gering und gleicht den Volumenverlust der Anode nicht aus. Durch fehlenden Anpressdruck der Kathodenmasse wird der elektrische Kontakt zur Stromableitung unsicher. Die Folge ist ein Oszillieren der Spannung durch zusätzliche Übergangswiderstände. Die Batterie erreicht nicht die erwartete Kapazität.

### Beispiel 2

Eine Kathodenmassemischung wird wie folgt hergestellt:
- Braunstein (EMD GH-PT, Firma TOSOH) wird getempert bei 350°C.
- Mit einer Kaskade von Sieben mit Maschenweiten von 20 µm, 50 µm und 80 µm wird der Braunstein in zwei Fraktionen getrennt. Die Anteile < 20 µm und > 80 µm werden verworfen,
- Es wird eine Mischung von 25% der feinkörnigen Fraktion mit einem mittleren Korndurchmesser von 33,4 µm und 75% der grobkörnigeren Fraktion mit einem mittleren Korndurchmesser von 70,2 µm hergestellt.
- 95% der Braunsteinmischung werden zur Kathodenmasse gemischt mit:
   - 4% expandiertem Graphit (BNB 90, Firma TIMCAL) mit mittlerer Korngröße 35 µm, und
   - 1% PTFE (TF 9207, Firma Dyneon).

Die Kathodenmasse wird, wie in Beispiel 1 beschrieben zur Kathode gepresst. Die Dichte der Kathode beträgt 3,19 g/cm³. Die Kathode wird in eine Batterie nach Beispiel 1 verbaut. Als Speicherkörper wird ein PP-Vlies (Celgard 4560) von 1 mm Höhe eingesetzt. Die Batterie wird analog dem Beispiel 1 mit 0,6 mA/cm² entladen. In Fig. 3 ist erkennbar, dass die Batterie mit stabiler Spannung entladen werden kann. Die Kapazität erreicht den theoretisch möglichen Erwartungswert.

## Patentansprüche

1. Elektrochemische Spannungsquelle (1), mit:
- einer Anode (2), die Lithium aufweist,
- eine Kathode (3), die ein Manganoxid aufweist,
- einem Gehäuse (4), wobei die Kathode (3) und die Anode (2) in einem vom Gehäuse (4) umschlossenen Innenraum des Gehäuses (4) angeordnet sind und einander gegenüberliegen,
- einem Elektrolytreservoir in Form eines kompressiblen Speicherkörpers (6), der dazu ausgebildet ist, einen Elektrolyt aufzunehmen, wobei der Speicherkörper (6) zwischen der Anode (2) und der Kathode (3) angeordnet ist und dabei mit einer ersten Seite (6a) an einer Stirnseite (3b) der Kathode anliegt sowie mit einer zweiten Seite (6b), die der ersten Seite (6a) abgewandt ist, an einer Stirnseite (2a) der Anode (2) anliegt, wobei die Stirnseite (2a) der Anode (2) der besagten Stirnseite (3b) der Kathode (3) zugewandt ist, und
- einem Elektrolyt, der zumindest teilweise in dem Speicherkörper (6) aufgenommen ist,
**dadurch gekennzeichnet,**
- **dass** der Speicherkörper (6) aus einem elektrisch isolierenden Material besteht, und
- **dass** die Kathode (3) dazu ausgebildet ist, bei einer Entladung der Spannungsquelle (1) eine Volumenzunahme zu erfahren, wobei die Anode (2) dazu ausgebildet ist, bei der Entladung eine Volumenabnahme zu erfahren, wobei zu jedem Zeitpunkt der Entladung der Absolutbetrag der bis dahin erfolgten Volumenzunahme der Kathode (3) zumindest so groß ist wie der Absolutbetrag der bis dahin erfolgten Volumenabnahme der Anode (2).

2. Elektrochemische Spannungsquelle nach Anspruch 1, **dadurch gekennzeichnet, dass** Mangan in dem Manganoxid überwiegend in der Oxidationsstufe +4 vorliegt, wobei das Manganoxid insbesondere getempertes γ-MnO₂ ist.

3. Elektrochemische Spannungsquelle nach Anspruch 1 oder 2, **dadurch gekennzeichnet, dass** das Manganoxid eine BET-Oberfläche im Bereich von 15 m²/g bis 20m²/g aufweist.

4. Elektrochemische Spannungsquelle nach einem der vorhergehenden Ansprüche, **dadurch gekennzeichnet, dass** die Kathode (3) aus dem Manganoxid gepresst ist, wobei das Manganoxid ein Gemisch aus zumindest einer ersten und einer zweiten pulverförmigen Fraktion ist, wobei die erste Fraktion feinkörniger ist als die zweite Fraktion.

5. Elektrochemische Spannungsquelle nach Anspruch 4, **dadurch gekennzeichnet, dass** die erste Fraktion eine mittlere Korngröße im Bereich von 30 µm bis 40 µm, insbesondere 35 µm aufweist, und wobei die zweite Fraktion eine mittlere Korngröße im Bereich von 65 µm bis 75 µm, insbesondere 70 µm aufweist.

6. Elektrochemische Spannungsquelle nach Anspruch 4 oder 5, **dadurch gekennzeichnet, dass** der Masseanteil der ersten Fraktion des Gemischs 15% bis 50% beträgt, und/oder dass der Masseanteil der zweiten Fraktion des Gemischs 50% bis 85% beträgt.

7. Elektrochemische Spannungsquelle nach einem der vorhergehenden Ansprüche, **dadurch gekennzeichnet, dass** der Speicherkörper (6) eines der folgenden Materialien aufweist oder aus einem der folgenden Materialien gebildet ist: ein nichtmetallisches Material, ein Polymer, Polyamid, Polyethylen, Polypropylen.

8. Elektrochemische Spannungsquelle nach einem der vorhergehenden Ansprüche, **dadurch gekennzeichnet, dass** das Gehäuse (4) hermetisch abgedichtet ist.

9. Elektrochemische Spannungsquelle nach einem der vorhergehenden Ansprüche, **dadurch gekennzeichnet, dass** die Kathode (3) und/oder die Anode (2) jeweils zylindrisch ausgebildet sind.

10. Elektrochemische Spannungsquelle nach einem der vorhergehenden Ansprüche, **dadurch gekennzeichnet, dass** das Gehäuse (4) eine der Kathode zugewandte Innenseite (4a) aufweist, die eine elektrisch isolierende Oberflächenschicht aufweist, wobei insbesondere die Oberflächenschicht ein Parylen aufweist oder aus einem Parylen gebildet ist.

11. Elektrochemische Spannungsquelle nach einem der vorhergehenden Ansprüche, **dadurch gekennzeichnet, dass** das Gehäuse (4) einen Deckel (7) mit einer Durchgangsöffnung (8) aufweist, durch die ein elektrisch leitfähiger Stift (9) aus dem Gehäuse (4) herausgeführt ist, wobei der Stift (9) elektrisch leitend mit der Kathode (3) verbunden ist, und wobei insbesondere der Stift (9) Molybdän aufweist oder aus Molybdän gebildet ist.

12. Elektrochemische Spannungsquelle nach einem der vorhergehenden Ansprüche, **dadurch gekennzeichnet, dass** ein in der Durchgangsöffnung (8) angeordneter Abschnitt des Stiftes (9) von einem Isolierkörper (10) umgeben ist, so dass der Stift (9) gegenüber dem Deckel (7) des Gehäuses (4) elektrisch isoliert ist, wobei insbesondere der Isolierkörper (10) aus einem Glas besteht.

13. Elektrochemische Spannungsquelle nach einem der vorhergehenden Ansprüche, **dadurch gekennzeichnet, dass** die elektrochemische Spannungsquelle (1) ein weiteres Elektrolytreservoir (66) aufweist, insbesondere in Form eines weiteren kompressiblen Speicherkörpers (66).

14. Elektrochemische Spannungsquelle nach einem der vorhergehenden Ansprüche, **dadurch gekennzeichnet, dass** die Anode (2) elektrisch leitfähig mit einem Endabschnitt (4b) des Gehäuses (4) verbunden ist, insbesondere über ein Ableitgitter (11).

15. Elektrochemische Spannungsquelle nach einem der vorhergehenden Ansprüche, **dadurch gekennzeichnet, dass** die Stirnseite (3b) der Kathode (3) einen Äquivalent-Durchmesser (D) aufweist, der kleiner ist als eine Länge der Kathode (3) entlang einer Längsachse (z) der Kathode (3).

16. Elektrochemische Spannungsquelle nach einem der vorhergehenden Ansprüche, **dadurch gekennzeichnet, dass** das Gehäuse (4) in Richtung einer Längsachse (z) des Gehäuses (4) längserstreckt ausgebildet ist, wobei insbesondere die Kathode (3) koaxial zur Längsachse (z) angeordnet ist und ebenfalls in Richtung der Längsachse (z) längserstreckt ausgebildet ist.

17. Elektrochemische Spannungsquelle nach einem der vorhergehenden Ansprüche, **dadurch gekennzeichnet, dass** die Kathode (3) und/oder die Anode (2) jeweils zylindrisch ausgebildet sind, wobei bevorzugt die Kathode und die Anode koaxial zu einer Längsachse (z) des Gehäuses (4) angeordnet sind, und wobei der Speicherkörper (6) koaxial zur Kathode (3) sowie zur Anode (2) angeordnet und vorzugsweise auch zylindrisch ausgebildet ist.
